Europäisches Patentamt

European Patent Office

Office européen des brevets

(11) Veröffentlichungsnummer: **0 510 747 A1**

# EUROPÄISCHE PATENTANMELDUNG

(21) Anmeldenummer: **92201026.9**

(51) Int. Cl.5: **B01D 53/34**

(22) Anmeldetag: **02.04.92**

(30) Priorität: **26.04.91 DE 4113793**

(43) Veröffentlichungstag der Anmeldung:
**28.10.92 Patentblatt 92/44**

(84) Benannte Vertragsstaaten:
**PT**

(71) Anmelder: **STEAG AG**
**Bismarckstrasse 54 Postfach 10 37 62**
**W-4300 Essen 1(DE)**

(72) Erfinder: **Farwick, Hermann, Dr.**
**Konrad-Adenauerstrasse 136a**
**W-4220 Dinslaken(DE)**
Erfinder: **Weiler, Helmut**
**Hofer Heide 31**
**W-5620 Velbert 1(DE)**
Erfinder: **Riepert, Albert**
**Harsumer-Weg 59**
**W-4230 Wesel(DE)**
Erfinder: **Rummelhohl, Volker**
**Bahnhofstrasse 130**
**W-4030 Ratingen 6(DE)**

(54) **Verfahren zum Entfernen unerwünschter Bestandteile aus einem Gasstrom.**

(57) In den heißen Gasstrom wird Kalkhydrat eingedüst, woraufhin der Gasstrom abgekühlt und entstaubt wird. Säurebildende Gasbeimengungen werden bei der Abkühlung unter ihren Taupunkt in partikelförmiges, leicht abtrennbares Erdalkalisalz umgewandelt. Das Verfahren ist energetisch günstig und
erhöht die Lebensdauer der Anlage ohne das Erfordernis hochwertiger Materialien.

Fig. 1

EP 0 510 747 A1

Die Erfindung betrifft ein Verfahren zum Entfernen mindestens eines unerwünschten gasförmigen Bestandteils aus einem Gasstrom, insbesondere aus einem Abgasstrom einer Verbrennungsanlage.

Abgasströme von Verbrennungsanlagen müssen unter den Anforderungen des Umweltschutzes und der Lebensdauer der Anlagen von unerwünschten Bestandteilen gereinigt werden, die für die Umwelt und/oder die den Gasstrom führenden Anlagenteile schädlich sind.

Abgasströme enthalten neben festen Partikeln, die relativ leicht herausgefiltert werden können, schädliche Beimengungen, die bei Gasströmen hinreichend hoher Temperatur gasförmig sind. Dies sind in Verbrennungsanlagen, die fossile Brennstoffe nutzen, beispielsweise säurebildende Gase wie $SO_2$, $NO_x$, $SO_3$ und Halogenwasserstoffen.

Für die Trennung der einzelnen Gase vom Gasstrom sind eine Vielzahl von Verfahren bekannt, die nach verschiedenen physikalisch-chemischen Prinzipien bei unterschiedlichen Gastemperaturen arbeiten. Dabei findet im allgemeinen eine Abkühlung des Gasstromes zwischen Verbrennungskessel und Abgas-Schornstein statt. Aus energetischen Gründen (Wirkungsgrad der Anlage) und unter dem Gesichtspunkt des Umweltschutzes wird dabei angestrebt, daß die Temperatur des Gasstromes am Ende dieses Weges, also am Schornstein, niedrig ist.

Dies führt dazu, daß an einem Ort des Gasstromes die Taupunkt-Temperaturen zumindest eines Teils der säurebildenden Gas-Beimengungen unterschritten wird und daß es dann zur Kondensation von Säuren an den inneren Anlagenteilen kommt. Diese Kondensation von Säuren im Gasstrom von Verbrennungsanlagen, insbesondere von Schwefelsäure und Halogenwasserstoffen, führt zu starken Belastungen der Anlagenteile, die dann mit hohem Aufwand (Emaillierung, Bleiauskleidung, etc.) geschützt werden müssen.

Beispielsweise erfolgt bei konventionellen Anlagen die Abkühlung des Gasstromes unter den Taupunkt von Schwefelsäure und Halogenwasserstoffen in einem Wärmetauscher, der zur Vorwärmung der dem Kessel zugeführten Verbrennungsluft genutzt wird (LUVO). Bei kostengünstigen regenerativen Wärmetauschern müssen deshalb die inneren Anlagenteile mit Emaille überzogen, häufig gereinigt und oft ausgetauscht werden, wobei zusätzlich zu den Wartungskosten des Wärmetauschers Kosten durch einen notwendigen Stillstand der Verbrennungsanlage entstehen.

Der Erfindung liegt daher die Aufgabe zugrunde, ein Verfahren zu schaffen, das eine energetisch günstige Abkühlung des Gasstromes verbunden mit einer Unterschreitung der Taupunkt-Temperaturen säurebildender Gas-Beimengungen gestattet, ohne daß dabei aggressive Säuren entstehen, und das gleichzeitig eine einfache Abtrennung unerwünschter Bestandteile vom Gasstrom sowie eine Erhöhung der Lebensdauer der Anlage ermöglicht.

Zur Lösung dieser Aufgabe ist das Verfahren nach der Erfindung dadurch gekennzeichnet, daß in den Gasstrom an einem Ort, an dem sich der Gasstrom auf einer Temperatur oberhalb der Taupunkt-Temperatur des unerwünschten gasförmigen Bestandteils befindet, Alkali- vorzugsweise Erdalkalioxide und/oder -hydroxide eingebracht werden, daß der Gasstrom anschließend auf eine Temperatur unterhalb der Taupunkt-Temperatur des unerwünschten Bestandteils gebracht wird, wobei sich zumindest ein Teil des unerwünschten Bestandteils in Verbindung mit den eingebrachten Erdalkalioxiden und/oder -hydroxiden in einen Stoff umwandelt, der in fester Form vorliegt, und daß der entstandene Feststoff aus dem Gasstrom entfernt wird.

Das Einblasen von Erdalkalioxiden und/oder -hydroxiden, wie vorzugsweise Kalkhydrat, in den heißen Gasstrom führt nach Abkühlen des Gasstromes zum Ausfallen fester Partikel von Erdalkalisalzen, bei Verbrennungsanlagen für fossile Brennstoffe insbesondere von Kalziumsulfat (Gips) und Kalziumhalogeniden, deren Trennung vom Gasstrom mit Hilfe von Filtern relativ leicht möglich ist. Die festen Partikel belasten die inneren Anlagenteile nur wenig und lassen sich bei laufendem Betrieb der Anlage von den Teilen abblasen, was die Anzahl der Abschaltungen der Anlage zu Reinigungszwecken stark verringert.

Eine energetisch vorteilhafte Weiterbildung der Erfindung ist dadurch gekennzeichnet, daß das Absenken der Temperatur des Gasstromes unter die Taupunkt-Temperatur an einem zweiten Ort erfolgt, der stromab des ersten Ortes liegt, wobei vorzugsweise das Absenken der Temperatur in einem Wärmetauscher erfolgt. Dabei kann die in dem Wärmetauscher gewonnene Energie wieder dem Verbrennungsprozeß zugeführt werden. Der Wärmetauscher kann relativ kostengünstig gestaltet werden, da beispielsweise auf eine Emaillierung der Innenflächen verzichtet werden kann.

Eine vorteilhafte Anwendung der Erfindung betrifft Gasströme, die Halogenwasserstoffe und/oder $SO_3$ enthalten. Deren Taupunkt wird im Wärmetauscher bei hohem Wirkungsgrad der Anlage unterschritten, wobei die erwünschten Feststoffe entstehen. Enthält der Gasstrom $SO_2$, so ist es besonders vorteilhaft, daß vor der Einbringung der Erdalkalioxide und/oder -hydroxide zumindest ein Teil des $SO_2$ in $SO_3$ konvertiert wird. Die Konvertierung kann mit Hilfe eines oxidierenden Katalysators erfolgen. Wenn der Katalysator so gestaltet ist, daß eine vollständige Konvertierung des $SO_2$ zu $SO_3$ erfolgt, so kann durch die Zufuhr von Erdalkalioxiden und/oder -hydroxiden, die Abkühlung des Gasstroms unter die Taupunkt-Temperatur von $SO_3$ und die Herausfilterung der festen Stoffe (Gips-Partikel) eine vollständige Entschwefelung des Gasstromes erreicht werden. Damit kann auf eine zusätzliche Entschwefelungsanlage (REA) verzichtet werden.

Eine weitere vorteilhafte Weiterbildung der Erfindung ist dadurch gekennzeichnet, daß der Gasstrom als unerwünschten gasförmigen Bestandteil neben Stickoxiden gasförmige Siliziumverbindungen, wie sie beim Zusammenwirken von $SiO_2$ mit Fluß- und Schwefelsäure bei Temperatur unterhalb des Taupunktes der Schwefelsäure entstehen können, enthält und daß die gebildeten festen Stoffe $SiO_2$ und Erdalkalisulfate und -halogenide enthalten, in welche die gasförmigen Siliziumverbindungen überführt wurden, wobei vorzugsweise nach dem Entfernen der gebildeten Feststoffe der Anteil der Stickoxide in dem Gasstrom durch Einwirken eines Katalysators reduziert wird. Bekannte Verfahren zur Abtrennung von Stickoxiden aus dem Gasstrom arbeiten mit einem Katalysator bei relativ hohen Temperaturen. Wenn der auf den Katalysator einwirkende Gasstrom gasförmige Siliziumverbindungen enthält, so kann es am Katalysator zur Bildung von $SiO_2$ kommen (sogenannte Verglasung), wodurch der Katalysator geschädigt wird. Wird stromauf des Katalysators das erfindungsgemäße Verfahren eingesetzt, so sind bereits alle Siliziumverbindungen vom Gasstrom abgetrennt.

Im folgenden wird die Erfindung anhand von in der Zeichnung schematisch dargestellten Ausführungsbeispielen näher erläutert. In der Zeichnung zeigen:

Fig. 1 eine erfindungsgemäße Verfahrensführung mit Kalkhydratzufuhr, Wärmetauscher und Entstaubung;

Fig. 2 eine weitere Ausführungsform der Erfindung mit vorheriger katalytischer Entstickung und Umwandlung von $SO_2$ in $SO_3$; und

Fig. 3 eine dritte Ausführungsform der Erfindung bei einer Verfahrensführung mit Entstaubung, Entschwefelung und Entstickung in dieser Reihenfolge.

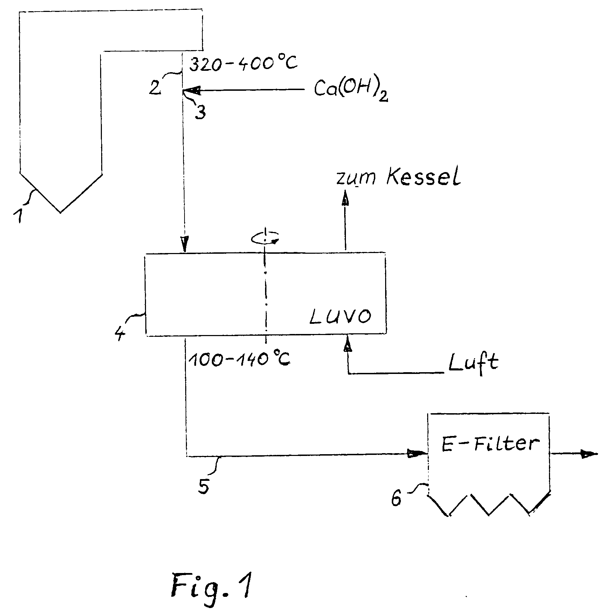

Bei dem in Fig. 1 dargestellten Verfahren wird in das über eine Leitung 2 herangeführte Rauchgas, welches eine Temperatur von etwa 320-400°C hat, über ein Düsensystem 3 Kalkhydrat eingedüst. Anschließend gelangt der Rauchgasstrom zu einem Wärmetauscher 4, der der Vorwärmung der Verbrennungsluft dient (LUVO). Beim Durchgang durch den Wärmetauscher 4 kühlt sich der Gasstrom auf etwa 100-140°C ab. Der Gasstrom wird dann zur Staubabscheidung über die Leitung 5 einem Elektrofilter 6 und anschließend weiteren Stufen der Rauchgasreinigung zugeführt.

Der Abgasstrom, der durch die Leitung 2 den Kessel 1 verläßt, kann u.a. unerwünschte Bestandteile wie $SO_3$ und Halogenwasserstoffe enthalten. Beim Abkühlen des Gasstromes im Wärmetauscher 4 unter die Taupunkt-Temperaturen der unerwünschten gasförmigen Bestandteile werden diese durch Einwirken des Kalkhydrats zu Kalziumsulfat (Gips) und Kalziumhalogeniden umgesetzt, die als feste Partikel vorliegen. Diese festen Partikel lagern sich zum Teil bereits im Wärmetauscher ab; der größte Teil verläßt den Wärmetauscher 4 über die Leitung 5 und gelangt zum Elektrofilter 6. Der durch die festen Partikel verschmutzte Wärmetauscher 4 kann während des laufenden Betriebs der Anlage in regelmäßigen Abständen durch Einblasen von beispielsweise Luft oder Dampf gereinigt werden.

Das Verfahren bewirkt bei hohem Wirkungsgrad eine vollständige Entfernung von $SO_3$ und Halogenwasserstoffen aus dem Rauchgas, und der Wärmetauscher wird nicht durch Einwirken kondensierter Säuren belastet. Die einfache Reinigung bei laufendem Betrieb der Verbrennungsanlage stellt eine sehr kostengünstige Lösung dar.

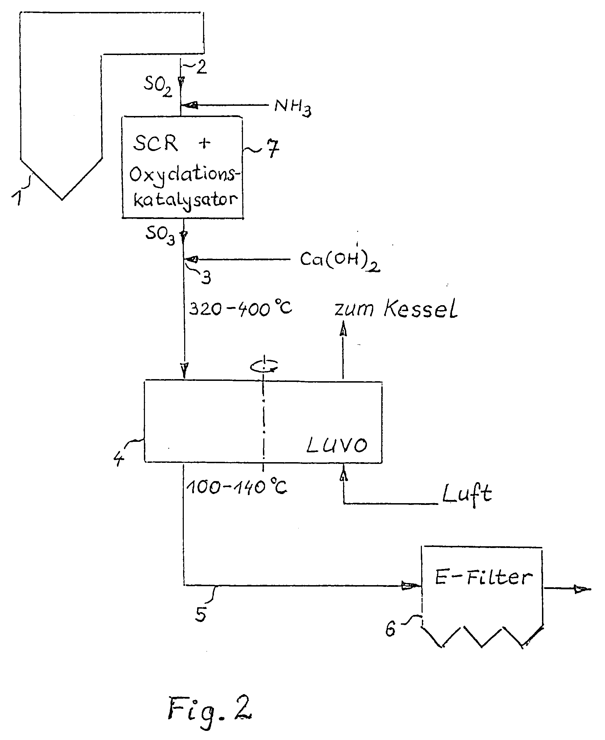

In Fig. 2 ist eine Verfahrensführung dargestellt, die es zusätzlich zu der in Fig. 1 dargestellten Verfahrensführung gestattet, Stickoxide und $SO_2$ aus dem Rauchgas zu entfernen. Das Rauchgas verläßt den Kessel 1 über die Leitung 2 mit einer Temperatur von etwa 320 bis 400°C. Anschließend wird es unter Zugabe eines Reduktionsmittels wie $NH_3$ einer selektiven katalytischen Reduktion (SCR) zugeführt. Die SCR-Anlage 7 enthält außerdem einen Oxidations-Katalysator. Nach dem Verlassen der SCR-Anlage 7 entspricht die weitere Verfahrensführung der in Fig. 1 dargestellten. Die SCR-Anlage hat die Aufgabe, Stickoxide aus dem Rauchgas zu entfernen. Darüberhinaus bewirkt der zusätzliche Oxidations-Katalysator eine Oxidation des im Rauchgas in der Leitung 2 vorhandenen $SO_2$ zu $SO_3$. Dies bewirkt, daß der zu $SO_3$ umgesetzte Schwefelanteil des Rauchgases durch Zugabe von Kalkhydrat, anschließendem Abkühlen unter die Taupunkt-Temperatur der Schwefelsäure und Ausfiltern der so entstandenen Gips-Partikel entfernt werden kann. Eine direkte Entfernung des $SO_2$ ohne Oxidation zu $SO_3$ ist über die Zufuhr von Kalkhydrat deshalb nicht möglich, weil die erforderliche Taupunkt-Temperatur (von $SiO_2$)in der Anlage nicht unterschritten wird. Es bedarf dann einer REA.

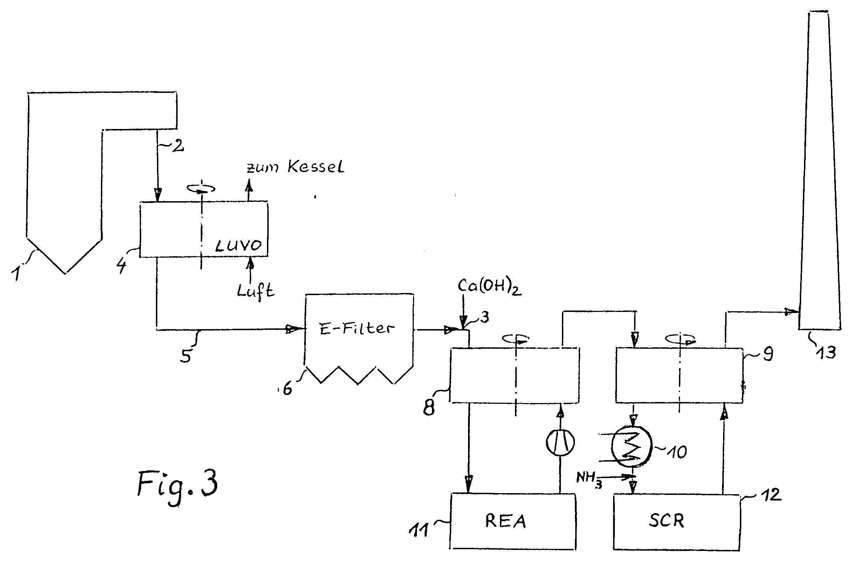

Den Einsatz des erfindungsgemäßen Verfahrens in einer Anlage, in der die SCR-Anlage einer Rauchgas-Entschwefelunganlage (REA) nachgeordnet ist, ist in Fig. 3 dargestellt. Der aus dem Kessel 1 über die Leitung 2 zum Wärmetauscher 4 geleitete Rauchgasstrom wird dort (auf eine Temperatur oberhalb der Taupunkt-Temperatur der Schwefelsäure) abgekühlt und gelangt dann über die Leitung 5 zum Elektrofilter 6, welches einen großen Teil der Staubpartikel abscheidet. Anschließend wird mit dem Düsensystem 3 Kalkhydrat in den Gasstrom eingedüst und dieser einem regenerativen zweiten Wärmetauscher 8 zugeführt. In diesem Wärmetauscher 8 kühlt sich der Gasstrom unter die Taupunkt-Temperatur der Schwefelsäure ab und gelangt zur Rauchgasentschwefelungsanlage 11. Wenn der Gasstrom die Rauchgasentschwefelungsanlage 11 verlassen hat, wird er auf der anderen Seite des Wärmetauschers 8 erwärmt und gelangt in den Wärmetauscher 9, wo er weiter erwärmt wird. Um die für die SCR-Anlage 12 notwendigen Temperaturen zu erhalten, wird der Gasstrom durch eine Heizung 10 geleitet. Anschließend wird er unter Zugabe von $NH_3$ der SCR-Anlage 12 zugeführt. Nach Verlassen der SCR-Anlage 12 wird der Gasstrom im Wärmetauscher 9 abgekühlt und verläßt die Verbrennungsanlage über den Schornstein 13. Bei bekannten Verfahrensführungen mit hintereinandergeschalteten Rauchgas-Entschwefelungs- und SCR-Anlagen ohne vorherige Kalkhydratzufuhr war es möglich, daß der Katalysator in der SCR-Anlage durch gasförmige Siliziumverbindungen geschädigt wurde. Die gasförmigen Siliziumverbindungen gelangten auf einem im folgenden beschriebenen Weg in die SCR-Anlage. Der Gasstrom enthält hinter dem Elektrofilter Anteile von $SiO_2$, HF und $SO_3$. Durch Abkühlen des Gasstromes im Wärmetauscher 8 unter den Taupunkt der Schwefelsäure wird das $SiO_2$ mit HF zu $SiF_4$ und weiter zu $H_2SiF_6$ umgesetzt. Obwohl die Rauchgas-Entschwefelungsanlage 11 die so entstandenen Verbindungen aus dem Gasstrom entfernt, gelangt ein geringer Teil des $H_2SiF_6$ über einen Adsorptions-Resorptions-Mechanismus im regenerativen Wärmetauscher 8 auf die Seite, an der der Gasstrom den Wärmetauscher 8 verläßt und zum Wärmetauscher 9 geleitet wird. Auf dieser Seite des Wärmetauschers 8 erfolgt eine Resorption des $H_2SiF_6$, so daß $SiF_4$ in den Gasstrom gelangt. In der SCR-Anlage 12 bildet sich unter dem katalytischen Einfluß von Vanadiumpentoxid ($V_2O_5$) aus $SiF_4$ und Wasserdampf Siliziumdioxid ($SiO_2$) an der aktiven Katalysatoroberfläche, wobei letzterer teilweise verglast und dadurch blockiert wird.

Das Eindüsen von Kalkhydrat gemäß Figur 3 in den Rauchgasstrom bewirkt eine nahezu vollständige Eliminierung des $SiF_4$, die sich folgendermaßen erklären läßt: Hexafluorokieselsäure ($H_2SiF_6$) hydrolysiert im alkalischen Medium zu $SiO_2$ und $CaF$. Durch die Kalkhydrat-Zugabe werden außerdem die für den Adsorptions-Resorptions-Mechanismus erforderlichen Säuren (HF und $H_2SO_4$) abgebunden.

Bei den in Figur 1 bis 3 dargestellten bevorzugten Ausführungsbeispielen der Erfindung ist jeweils eine Eindüsung von Kalkhydrat vorgesehen. Jedoch sind ähnliche Erfolge wie mit Kalkhydrat auch durch den Einsatz anderer Alkalien und Erdalkalien zu erwarten.

**Patentansprüche**

1. Verfahren zum Entfernen mindestens eines unerwünschten gasförmigen Bestandteils aus einem Gasstrom, insbesondere aus einem Abgasstrom einer Verbrennungsanlage,
   **dadurch gekennzeichnet,**
   daß in den Gasstrom an einem Ort, an dem sich der Gasstrom auf einer Temperatur oberhalb der Taupunkt-Temperatur des unerwünschten gasförmigen Bestandteiles befindet, Alkali- vorzugsweise Erdalkalioxide und/oder -hydroxide eingebracht werden,
   daß der Gasstrom anschließend auf eine Temperatur unterhalb der Taupunkt-Temperatur des unerwünschten Bestandteiles gebracht wird, wobei sich zumindest ein Teil des unerwünschten Bestandteils in Verbindung mit den eingebrachten Erdalkalioxiden und/oder -hydroxiden in einen Stoff umwandelt, der in fester Form vorliegt, und
   daß der entstandene Feststoff aus dem Gasstrom entfernt wird.

2. Verfahren nach Anspruch 1, dadurch gekennzeichnet, daß das Absenken der Temperatur des Gasstromes unter die Taupunkt-Temperatur an einem zweiten Ort erfolgt, der stromab des ersten Ortes liegt.

3. Verfahren nach Anspruch 2, dadurch gekennzeichnet, daß das Absenken der Temperatur in einem Wärmetauscher erfolgt.

4. Verfahren nach einem der Ansprüche 1 bis 3, dadurch gekennzeichnet, daß der Gasstrom als unerwünschten gasförmigen Bestandteil säurebildende Gase, insbesondere Halogenwasserstoffe und/oder $SO_3$, enthält.

5. Verfahren nach Anspruch 4, dadurch gekennzeichnet, daß der Gasstrom $SO_2$ enthält und daß vor der Einbringung der Erdalkalioxide und/oder -hydroxide zumindest ein Teil des $SO_2$ in $SO_3$ konvertiert wird.

6. Verfahren nach einem der Ansprüche 1 bis 5, dadurch gekennzeichnet, daß der Gasstrom als unerwünschten gasförmigen Bestandteil gasförmige Siliziumverbindungen enthält und daß die gebildeten festen Stoffe $SiO_2$ und Erdalkalisulfate und -halogenide enthalten, in welche die gasförmigen Siliziumverbindungen überführt wurden.

7. Verfahren nach Anspruch 6, dadurch gekennzeichnet, daß der Gasstrom Stickoxide enthält und daß nach dem Entfernen der gebildeten festen Stoffe der Anteil der Stickoxide in dem Gasstrom durch Einwirken eines Katalysators reduziert wird.

320-400°C

2 Ca(OH)$_2$

3

zum Kessel

1

LUVO

4

100-140°C Luft

E-Filter

5

6

Fig. 1

SO$_2$ ~2

NH$_3$

SCR + Oxydations-katalysator ~7

1

SO$_3$

Ca(OH)$_2$

~3

320-400°C

zum Kessel

4

LUVO

100-140°C

Luft

E-Filter

5

6

Fig. 2

Fig. 3

zum Kessel

Luft

LUVO

Ca(OH)$_2$

E-Filter

NH$_3$

REA

SCR

EP 0 510 747 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 410 731 (KRAHE)<br>* Seite 4, Zeile 2 - Zeile 24; Ansprüche 1,2; Abbildungen 1,2 * | 1-4 | B01D53/34 |
| Y | | 6,7 | |
| Y | EP-A-0 261 950 (OSAKA SANSO KOGYO KK)<br>* Seite 2, Zeile 39 - Zeile 59; Ansprüche 1-4 * | 6,7 | |
| Y | EP-A-0 268 118 (RHEIN. BRAUNKOHLEWERKE AG)<br>* Spalte 5, Zeile 1 - Zeile 14; Anspruch 1; Abbildung 1 * | 6,7 | |
| X | DE-A-3 308 927 (L.& C. STEINMÜLLER GMBH)<br>* Ansprüche 1,2; Abbildungen 1,3 * | 1-4 | |
| X | EP-A-0 250 878 (ELEC. POWER RESEARCH INST. INC.)<br>* Ansprüche 1-9; Abbildung 5 * | 1-4 | |
| Y | US-A-4 649 034 (RUTLEDGE)<br>* Ansprüche 1-6 * | 1-5 | RECHERCHIERTE SACHGEBIETE (Int. Cl.5) |
| Y | US-A-4 387 078 (LIN)<br>* Spalte 4, Zeile 55 - Spalte 5, Zeile 27 *<br>* Spalte 6, Zeile 24 - Zeile 25; Abbildung 1 * | 1-5 | B01D |

Der vorliegende Recherchenbericht wurde für alle Patentansprüche erstellt

| Recherchenort | Abschlußdatum der Recherche | Prüfer |
|---|---|---|
| DEN HAAG | 28 JULI 1992 | EIJKENBOOM T. |